# EUROPÄISCHE PATENTANMELDUNG

(11) **EP 2 216 733 A2**
(43) Veröffentlichungstag der Anmeldung: **11.08.2010**
(21) Anmeldenummer: 10151740.7
(22) Anmeldetag: 27.01.2010
(51) Int. Cl.: G06K 7/00, G06K 19/067, E05B 73/00, G08B 13/24, G06Q 10/00, H01Q 1/22

(54) **Scan-Schleuse**

(30) Priorität: 09.02.2009 DE 102009008123
(71) Anmelder: Wanzl Metallwarenfabrik GmbH, 89336 Leipheim (DE)
(72) Erfinder: Hämmerle, Jürgen, 89312 Günzburg (DE); Rudolph, Michael, 30880 Laatzen (DE)

(57) **Zusammenfassung**

Die Erfindung betrifft eine Scan-Schleuse (1) mit Seitenteilen (1.1,1.2), Antennen (7) für das Scannen von auf Waren (2) versehenen RFID-Tags (3), mit Schnittstellen zu wenigstens einer Datenverarbeitungseinheit (5) und anderen Bauteilen (6). Die Erfindung zeichnet sich dadurch aus, dass die Scan-Schleuse (1) aus mindestens zwei gegenüberliegenden Seitenteilen (1.1,1.2) gebildet ist, wobei die Seitenteile (1.1,1.2) einen Scan-Bereich (1.3) bilden, um die Daten der Tags (3) zu lesen, und wobei jedes Seitenteil (1.1,1.2) hierfür eine Anzahl an Antennen (7) aufweist.

## Beschreibung

Die Erfindung betrifft eine Scan-Schleuse nach dem Oberbegriff des ersten Patentanspruchs der Anmeldung.

Ein so genannter Scan-Tunnel ist aus der deutschen Patentschrift DE 102 00 912 B4 bekannt. Zunächst werden die zu kommissionierenden Waren auf ein Förderband gelegt. Jede Ware ist mit einem Transponder versehen, der einen eigenen Code in Form einer Seriennummer besitzt. Weiterhin sind die Transponder mit Informationen zur Ware selber beschrieben, wie z.B. Produktname, Herstelldatum, Verfallsdatum, Chargennumer, etc. Die Waren werden dann auf dem Förderband liegend durch den Scan-Tunnel befördert. Der Scan-Tunnel wird durch eine Steuer-/Empfangs-Einheit aktiviert, indem an der Tunnel-Oberfläche befindlichen Sende-/Empfangsantennen angeregt werden und ein elektromagnetisches Feld erzeugen. Es sind drei Antennen vorgesehen. Eine Antenne ist an dem Tunneldeckel, eine weitere Antenne an einer Tunnelwand und eine dritte senkrecht zur Förderrichtung angeordnet.

Das auf diese Weise im Scan-Tunnel erzeugte elektromagnetische Feld bewirkt, dass wiederum die darin befindlichen Transponder der durchgeleiteten Waren angeregt werden. Dadurch antworten die einzelnen Transponder, indem sie einerseits die Seriennummer und andererseits die in den Transpondern emittierten Daten der Steuer-/Empfangs-Einheit übermitteln. Die Steuer-/Empfangs-Einheit kommuniziert mit einem Rechner, der u.a. einen Soll-Ist-Vergleich durchführen kann. Der Rechner ist ferner an eine Datenbank angeschlossen.

Die Aufgabe der vorliegenden Erfindung besteht darin, ein verbessertes Erfassen und Auslesen von auf Waren angeordneten Daten.

Die Erfindung löst die Aufgabe mit den Merkmalen im Hauptanspruch.

Die auf den Waren angebrachten Tags, können in einfacher Art und Weise im Scan-Bereich der Schleuse ausgelesen werden. Die ausgelesenen Daten werden dann mittels einer Standardschnittstelle an eine Datenverarbeitungseinrichtung und andere Bauteile weitergeleitet.

Die Erfindung wird anhand eines Ausführungsbeispiels näher erläutert. Es zeigt
- Fig. 1: eine schematische Darstellung einer Scan-Schleuse gebildet aus zwei Seitenteilen, einer Bezahlstation sowie einer Aus- gangsanlage;
- Fig. 2: eine Scan-Schleuse in Seitenansicht, sowie

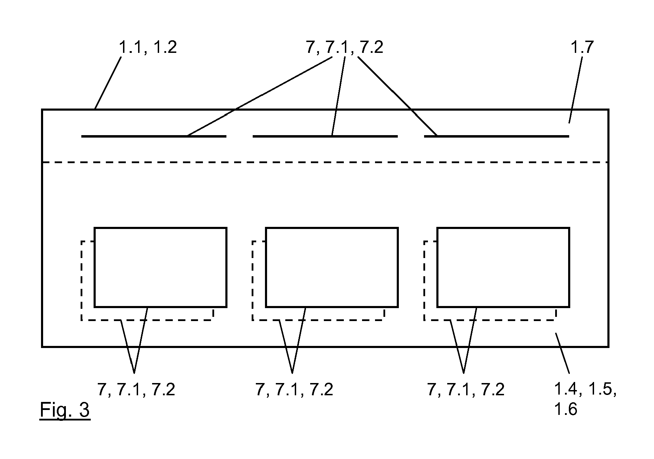

- Fig. 3: die Scan-Schleuse in Draufsicht.

Die Erfindung betrifft eine Scan-Schleuse 1 mit Seitenteilen 1.1, 1.2. Eine solche Art einer Schleuse 1 ist vorzugsweise im Bereich einer so genannten Kassenzone angeordnet. Es bieten sich aber auch andere Einsatzorte an. Die Schleuse 1 dient der Erfassung insbesondere von Waren 2 oder Artikeln oder anderen Gegenständen. Diese Waren 2 sind mit einem Funketikett, einem so genannten Tag 3, versehen. Aus dem Stand der Technik ist eine Reihe an Funketiketten bekannt, auf die an dieser Stelle nicht weiter eingegangen werden soll. Als vorteilhaft hat sich der Einsatz von Tags 3 erwiesen, die im Bereich der UHF-Frequenzen ausgelesen werden können. Aber auch ein Auslesen von Tags 3 mit zukünftigen Frequenzen soll möglich sein.

Der Abstand zwischen beiden Seitenteilen 1.1,1.2 ist derart gewählt, dass für den Einsatz in der Kassenzone z.B. ein Transportwagen zwischen beiden Seitenteilen 1.1, 1.2 hindurchgeschoben werden kann. Auch wäre denkbar, Scan-Schleusen 1 zu schaffen, in denen lediglich ein Korb mit Ware 2 transportiert und gescannt werden kann. Auch im Bereich Logistik und Industrie bietet sich eine solche Schleuse 1 z.B. für das Scannen von Ware 2 auf einem Container an.

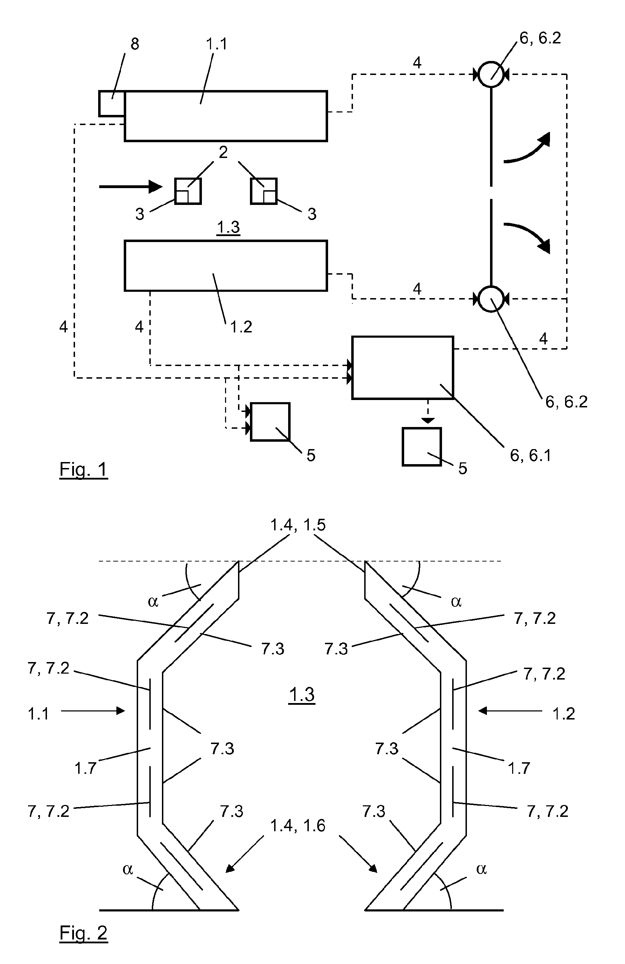

Die Schleuse 1 weist Antennen 7 auf. Diese sind für das Scannen von auf Waren 2 versehenen Tags 3 vorgesehen. Die Scan-Schleuse 1 weist Schnittstellen 4 zu wenigstens einer Datenverarbeitungseinheit 5 und anderen Bauteilen 6 auf. Zu anderen Bauteilen 6 zählen, wie in Figur 1 beispielhaft dargestellt, z.B. eine Bezahlstation 6.1 und/oder eine Ausgangsanlage 6.2. Es können aber auch andere Bauteile 6 eingesetzt werden.

Die Ausgangsanlage 6.2 kann verschiedenartig gebildet sein. In Figur 1 ist eine Anlage 6.2 mit zwei Bügeln dargestellt, es wäre aber auch eine Anlage 6.2 mit einem Bügel, ein Drehkreuz oder eine sonstige Einrichtung denkbar.

Die Scan-Schleuse 1 ist aus mindestens zwei gegenüberliegenden Seitenteilen 1.1, 1.2 gebildet, wobei die Seitenteile 1.1, 1.2 einen Scan-Bereich 1.3 bilden. In diesem Scan-Bereich 1.3 werden die Daten der Tags 3 gelesen, die sich auf jeder Ware 2 befinden. Daten können in diesem Zusammenhang Angaben über die Ware selber, die Menge, die Einheit, den Preis, usw. sein.

Es ist eine Vielzahl an Tags 3 bekannt. Der Einsatz von UHF-Tags 3 hat sich als vorteilhaft erwiesen.

Jedes Seitenteil 1.1, 1.2 weist zum Auslesen der Daten eine Anzahl an Antennen 7 auf.

Es hat sich als vorteilhaft erwiesen, Antennengruppen 7.1 vorzusehen, wobei drei Antennengruppen 7.1 pro Seitenteil 1.1, 1.2 Einsatz finden. Eine andere Anzahl an Antennengruppen 7.1 wäre jedoch auch denkbar. Jede Antennengruppe 7.1 ist aus mehreren Einzelantennen 7.2 gebildet.

Der Einsatz von so genannten Patch-Antennen hat sich als besonders vorteilhaft erwiesen. Bei diesen ist von einem so genannten Antennengewinn von bis zu 10dBi zu rechnen.

Eine Anzahl an Einzelantennen 7.2 eines ersten Seitenteils 1.1 weist einen geringeren Abstand zum gegenüberliegenden zweiten Seitenteil 1.2 auf. Hierfür weist jedes Seitenteil 1.1, 1.2 wenigstens einen abgewinkelten Bereich 1.4 auf. Dieser abgewinkelte Bereich 1.4 erzeugt die dritte Polarisationsebene.

Die Antennengruppen 7.1 besitzen verschiedene Polarisationsebenen. Bei dem Einsatz einer bereits erwähnten Patch-Antenne wird dies durch eine Kontaktierung mit einer Metallplatte erreicht. Hierdurch entstehen Antennengruppen 7.1 mit einer horizontalen und einer vertikalen Polarisation.

Die in den Seitenteilen 1.1, 1.2 gegenüberliegenden Antennengruppen 7.1 weisen jeweils eine andere Polarisation auf, um eine gegenseitige Beeinflussung weitestgehend zu vermeiden.

Ferner ist eine Abdeckung 7.3 jeder Einzelantenne 7.2 aus einem nicht metallischen Material, wie beispielsweise Kunststoff vorgesehen. Die Abdeckung 7.3 ist hin zu dem jeweils gegenüberliegenden Seitenteil 1.1, 1.2 angeordnet. Die Größe der Abdeckung 7.3 richtet sich nach der Größe der jeweiligen Einzelantenne 7.2. Es ist auch möglich, eine Abdeckung auf der kompletten Innenseite eines Seitenteils 1.1, 1.2 vorzusehen.

Der Einsatz von Antennen 7 mit zirkulierender Polarisation wäre weiterhin auch denkbar.

Fig. 2 zeigt eine Variante, bei der der obere Bereich 1.5 und der untere Bereich 1.6 jedes Seitenteils 1.1, 1.2 diesen abgewinkelten Bereich 1.4 vorsieht. Es ist aber auch denkbar, dass nur der obere Bereich 1.5 oder nur der untere Bereich 1.6 jedes Seitenteils 1.1, 1.2 einen abgewinkelten Bereich 1.4 aufweist.

Beste Auslesedaten werden bei einem abgewinkelten Bereich 1.4 mit einem Winkel α zwischen 60° und 70° zur Horizontalen erzielt. Andere Winkel sind denkbar und bleiben dem Fachmann überlassen.

Die Größe des abgewinkelten Bereichs 1.4 richtet sich nach der Größe der eingebauten Einzelantennen 7.2. Gute Ergebnisse wurden bei einer Flächenverteilung von ca. 25% für die Fläche des unteren abgewinkelten Bereichs 1.6, ca. 50% für das Mittelteil 1.7 und wiederum 25% für den oberen abgewinkelten Bereich 1.5 erzielt.

Der eigentliche Scan-Vorgang beginnt selbsttätig oder wird mittels eines Schaltelements 8 gestartet. Als Schaltelement 8 könnte ein Taster, ein Kartenleser, eine Lichtschranke, ein Bewegungsmelder, usw. eingesetzt werden.

Um die Geschwindigkeit des Scan-Vorgangs während der Nutzung der Scan-Schleuse 1 beobachten zu können, ist eine Visualisierung des Scan-Vorgangs vorgesehen. Beispielsweise ist der Scan-Bereich 1.3 verschiedenfarbig hinterleuchtet. Hierfür können RGB-LED-Leuchtmittel eingesetzt werden. Die senkrecht angeordneten Leuchtmittel sind vorzugsweise parallel zueinander und vorzugsweise jeweils hinter jeder Antennengruppe 7.1 vorgesehen.

Die Farbe der Leuchtmittel ändert sich während des Scan-Vorgangs. Zu Beginn des Scann-Vorgangs weisen die Leuchtmittel eine erste, einheitliche Farbe auf und wenn der Scan-Vorgang abgeschlossen ist, weisen alle Leuchtmittel eine zweite, einheitliche Farbe auf.

Durch diese Visualisierung kann erkannt werden, wann der Scan-Vorgang beginnt und wann er beendet ist. Auch kann unterbunden werden, dass zu viele Waren 2 auf einmal gescannt werden.

Es ist ferner denkbar direkt vor und/oder nach der Schleuse 1 nicht näher dargestellte zusätzliche Verschlusselemente vorzusehen, um einen sicheren Scan-Vorgang zu gewährleisten.

Die verschiedenen Antennen 7 mit ihren verschiedenen Antennengruppen 7.1 sind derart positioniert, dass bestimmbar ist, welche Position die Waren 2 im Scan-Bereich 1.3 aufweisen.

Ferner ist eine Schnittstelle 4 zwischen jedem Seitenteil 1.1, 1.2 und anderen Bauteilen 6 vorgesehen. Hier bieten sich Standardschnittstellen wie LAN, WLAN und/oder USB an.

Eine Schnittstelle 4 ist zwischen jedem Seitenteil 1.1, 1.2 und einer Datenverarbeitungseinheit 5 vorgesehen. Eine solche Datenverarbeitungseinheit 5 kann für die Zwecke verschiedener Auswertungen verwendet werden. Eine Schnittstelle 4 mit der Warenwirtschaft und/oder der Lagerhaltung bietet sich ebenfalls an. Weiterhin ist eine Schnittstelle 4 mit einer Kasse oder Bezahlstation 6.1, z.B. beim so genannten Selfcheckout, sowie einer Ausgangsanlage 6.2 vorzusehen. Eine solche Anordnung ist in Figur 1 beispielhaft dargestellt.

In einer vorteilhaften Anordnung werden die Waren 2 in der Schleuse 1 gescannt. Die Daten werden an die Bezahlstation 6.1 weitergeleitet. Der Kassiervorgang findet dann an der Bezahlstation 6.1 statt. Dies geschieht beispielsweise mittels einer EC-Karte, Kreditkarte oder aber Bargeld. Erst nach dem erfolgreichen Bezahlvorgang wird die Ausgangsanlage 6.2 freigegeben bzw. geöffnet.

Um Manipulationsversuche zu unterbinden, besteht die Möglichkeit, verschiedene Maßnahmen zu ergreifen. Es bietet sich beispielsweise das Auslösen eines Alarms bei Betreten eines mit einer Lichtschranke begrenzten Bereichs an. So kann der Versuch, eine solche Schleuse 1 zu umgehen, verhindert werden. Auch die Aktivierung von Kameras oder das Senden von Fehlerreports wäre denkbar.

Die Leistung der Antennen 7 insbesondere der Einzelantennen 7.1 ist veränderbar. Hierbei wird die Leistung in Abhängigkeit der Anzahl der zu lesenden Tags 3 der Waren 2 derart angepasst, dass stets eine 100% Leserate gegeben ist.

In einer weiterführenden Variante werden die Daten der Waren 2, welche in der Scan-Schleuse 1 gescannt worden sind, mittels einer Schnittstelle 4 zu der Warenwirtschaft übermittelt. Somit ist der Bestand von Waren 2 stets aktuell erfasst und kann innerhalb kurzer Zeit angepasst werden.

Die Scan-Schleuse 1 ist insbesondere für den Einsatz von Kunststofftransportwagen in einem SB-Markt konzipiert. Um störungsfrei das Scannen der Waren 2 durchführen zu können, finden insbesondere so genannte Kunststoffwagen Verwendung. Ein solcher ist beispielsweise in der deutschen Patentschrift DE 10 2006 043 523 B3 beschrieben, wobei im Gegensatz zum Stand der Technik auf die im Kunststoff eingebrachten Antennen verzichtet werden kann. Solche Wagen weisen aufgrund ihres Materials geringe Störungen auf. Aber auch der Einsatz von Kunststofftragekörben bietet sich an.

In einer weiterführenden Variante sind ein zweiter oberer abgewinkelter Bereich 1.5 und/oder ein zweiter unterer abgewinkelter Bereich 1.6 an einem Mittelteil 1.7 angebracht. Somit können eine Reihe an Scan-Schleusen 1 aneinander gereiht werden. Die Anzahl und die Anordnung der Bezahlstationen 6.1 sind je nach Anforderung vorzusehen. Gleiches gilt für die Anzahl und die Anordnung der Ausgangsanlagen 6.2.

### Bezugszeichenliste

- 1: Scan-Schleuse, Schleuse
1.1 Erstes Seitenteil
1.2 Zweites Seitenteil
1.3 Scan-Bereich
1.4Abgewinkelter Bereich
1.5 Oberer abgewinkelter Bereich
1.6 Unterer abgewinkelter Bereich
1.7Mittelteil
- 2: Artikel, Gegenstände, Ware
- 3: Tag, Funketikett
- 4: Schnittstelle
- 5: Datenverarbeitungseinheit
- 6: Bauteil
6.1 Bezahlstation
6.2Ausgangsanlage
- 7: Antenne
7.1 Antennengruppe
7.2 Einzelantenne
7.3Abdeckung
- 8: Schaltelement

## Patentansprüche

1. Scan-Schleuse, mit Seitenteilen (1.1, 1.2), Antennen (7) für das Scannen von auf Waren (2) versehenen Tags (3), mit Schnittstellen zu wenigstens einer Datenverarbeitungseinheit (5) und anderen Bauteilen (6), **dadurch gekennzeichnet, dass** die Scan-Schleuse (1) aus mindestens zwei gegenüberliegenden Seitenteilen (1.1, 1.2) gebildet ist, wobei die Seitenteile (1.1, 1.2) einen Scan-Bereich (1.3) bilden, um die Daten der Tags (3) zu lesen, und wobei jedes Seitenteil (1.1, 1.2) hierfür eine Anzahl an Antennen (7) aufweist.

2. Scan-Schleuse nach Anspruch 1, **dadurch gekennzeichnet, dass** Antennengruppen (7.1) vorgesehen sind, wobei drei Antennengruppen (7.1) pro Seitenteil (1.1, 1.2) Einsatz finden.

3. Scan-Schleuse nach den Ansprüchen 1 und 2, **dadurch gekennzeichnet, dass** jede Antennengruppe (7.1) aus mehreren Einzelantennen (7.2) gebildet ist.

4. Scan-Schleuse nach den Ansprüchen 1 bis 3, **dadurch gekennzeichnet, dass** so genannte Patch-Antennen eingesetzt sind.

5. Scan-Schleuse nach den Ansprüchen 1 bis 4, **dadurch gekennzeichnet, dass** eine Anzahl an Einzelantennen (7.2) eines ersten Seitenteils (1.1) einen geringeren Abstand zum gegenüberliegenden zweiten Seitenteil (1.2) aufweisen.

6. Scan-Schleuse nach Anspruch 5, **dadurch gekennzeichnet, dass** jedes Seitenteil (1.1, 1.2) wenigstens einen abgewinkelten Bereich (1.4) aufweist.

7. Scan-Schleuse nach den Ansprüchen 5 und 6, **dadurch gekennzeichnet, dass** der obere Bereich (1.5) und/oder der untere Bereich (1.6) jedes Seitenteils (1.1, 1.2) diesen abgewinkelten Bereich (1.4) vorsieht.

8. Scan-Schleuse nach Anspruch 7, **dadurch gekennzeichnet, dass** der obere Bereich (1.5) jedes Seitenteils (1.1, 1.2) einen Winkel α zwischen 60° und 70° zur Horizontalen aufweist.

9. Scan-Schleuse nach einem der vorherigen Ansprüchen, **dadurch gekennzeichnet, dass** eine Abdeckung (7.3) jeder Einzelantenne (7.2) aus einem nicht metallischen Material vorgesehen ist.

10. Scan-Schleuse nach Anspruch 1, **dadurch gekennzeichnet, dass** der Scan-Vorgang selbsttätig oder durch ein Schaltelement (8) gestartet wird.

11. Scan-Schleuse nach Anspruch 1, **dadurch gekennzeichnet, dass** eine Visualisierung des Scan-Vorgangs vorgesehen ist.

12. Scan-Schleuse nach Anspruch 1, **dadurch gekennzeichnet, dass** die Position der Waren (2) im Scan-Bereich (1.3) bestimmbar ist.

13. Scan-Schleuse nach einem der vorherigen Ansprüchen, **dadurch gekennzeichnet, dass** die Leistung der Einzelantennen (7.2) veränderbar ist und in Abhängigkeit der Anzahl der zu lesenden Tags (3) derart anpasst wird, dass stets eine 100% Leserate gegeben ist.
